# EUROPEAN PATENT APPLICATION

(11) **EP 2 505 484 A1**
(43) Date of publication of application: **03.10.2012**
(21) Application number: 10832503.6
(22) Date of filing: 25.10.2010
(51) Int. Cl.: B63B 27/00, F03D 1/00

(54) **VESSEL FOR TRANSPORTING AND HOISTING OFFSHORE WIND GENERATING SET AND TRANSPORTING AND LIFTING METHOD**

(30) Priority: 27.11.2009 CN 200910241617
(71) Applicant: Sinovel Wind Group Co., Ltd, Haidian District, Beijing 100872 (CN)
(72) Inventor: LI, Yan, Beijing 100872 (CN); JIN, Baonian, Beijing 100872 (CN); ZHANG, Qin, Beijing 100872 (CN); LU, Jizhuang, Beijing 100872 (CN)
(74) Representative: McCartney, Jonathan William
(86) International application number: PCT/CN2010/001683
(87) International publication number: WO 2011/063596

(57) **Abstract**

A vessel for transporting and hoisting offshore wind generating set comprises a vessel body (7), a plurality of fixing brackets (1), first racks (31), second racks (32), a buffer device (5), a rotary crane (6) and a winding device (4). A U-shaped opening for a wind generator (8) passing there through is provided at the stern of the vessel body (7). The fixing brackets (1) are arranged in two rows in parallel, the bottom of which is fixed onto the deck inside the vessel body. The first racks (31) are mounted on the top of each row of the fixing brackets (1). The second racks (32) are mounted on the inner side of the two rows of the fixing brackets (1) on the deck. The second racks (32) are in parallel with the first racks (31). A hanging beam (2) slidably cooperated with the first racks (31) is provided on the body of the wind generator (8). The buffer device (5) is fixed to the bottom of the wind generator (8) and slidably cooperated with the second racks (32). The rotary crane (6) is fixed on top of two sides of the U-shaped opening. The winding device (4) is mounted on the stem of the vessel body. An offshore wind generating set transporting and hoisting method using a vessel for transporting and hoisting offshore wind generating set is also disclosed. The invention enables the wind generating set to be integrally transported and hoisted.

## Description

### FIELD OF THE INVENTION

The present invention relates to a hoisting vessel and a transporting and hoisting method using the vessel, and more particularly to a hoisting vessel integrally transporting and hoisting the offshore wind turbine, and a transporting and hoisting method using the hoisting vessel.

### BACKGROUND TO THE INVENTION

In recent years, with the development of wind power technologies and the gradual improvement and enhancement of the wind turbines' performance, the wind turbines are becoming more and more economic and efficient. The rated power per unit also augments constantly. The number and the coverage area of the wind turbines are gradually reduced under the same installed capacity, and the investment of the infrastructure is enormously saved accordingly. However, with further development of the wind power industry, the development of the onshore wind farms has been saturated day by day. Moreover, while the rated power per unit of the wind turbines is gradually magnified, the length and the weight of each part of the wind turbines are constantly augmented. Then the difficulty and the cost of transporting and installing the wind turbines are greatly increased. In comparison, wind farms on the sea (offshore wind farms) have the advantages of higher wind speed, lower turbulence, and lower wind shear and so on. Offshore wind turbines have the features of longer rotor diameter, lower rated wind speed, lower wheel hub height (lower tower barrel height), and higher blade tip velocity ratio under the same rated power. By this way, the power output from the wind turbines can be enhanced greatly, and the service life of the wind turbines can be extended enormously. Nowadays, offshore wind power is developing rapidly in many countries of the world, and domestic 10,000,000 kilowatt-level offshore wind farms are also planned.

However, it is a big challenge to install the wind turbines on the sea (the offshore wind turbines), and their construction process is severely influenced by wind and wave.

At present, installing solutions of the overseas offshore wind farms comprise: (1) By-parts assembling: In a similar manner to the installing solutions of the onshore wind turbines, the tower barrel, the nacelle and the rotor blades are installed successively into the wind farms. The hoisting vessels integrally jack them above the surface of the water, to avoid their heave and pitch aroused by wind and wave, so as to install the wind turbines safely and precisely. (2) Integrally hoisting: After the wind turbines are assembled in dock, they are integrally hoisted onto the installing vessel, transported to the wind farms, and integrally hoisted. Because at present this type of integrally hoisting is floating hoisting without exception, docking the wind turbines to the foundation should use buffering measures to protect the foundation and the wind turbines.

There have not been any mature special devices for installing the offshore wind turbines in domestic. Therefore hoisting devices will certainly become the bottleneck of the development of the offshore wind power, as far as the offshore wind power in domestic is concerned.

### OBJECTS OF THE INVENTION

To overcome the limitations of existing solutions of by-parts hoisting and integrally hoisting, so as to enhance the economy and safety of the wind farms' construction, and to shorten the building period and device commissioning period of the offshore wind farms, the present invention provides a vessel for integrally transporting and hoisting the offshore wind turbine, and a transporting and hoisting method using the vessel, which could enable the wind turbine to be integrally transported and hoisted. The present invention could not only ensure that the devices of the wind turbine are commissioned sufficiently before being hoisted, but also could transport and hoist the offshore wind turbine economically and efficiently. The present invention not only greatly shortens the period for constructing the wind farms, but also reduces the commissioning work after hoisting the wind turbine. Rapid grid-connection of the offshore wind turbine is realized also.

### SUMMARY OF THE INVENTION

The present invention provides a vessel for transporting and hoisting the offshore wind turbine, comprises: a hull, with a U-shaped opening for a wind turbine to pass through at the stern of the hull; a plurality of fixing brackets, which are arranged in two rows in parallel, the bottom of which are fixed onto the deck in the hull; first sliding rails, which are installed on the top of each row of the fixing brackets; second sliding rails, which are installed on the inner side of the two rows of the fixing brackets on the deck of the hull, and are in parallel with the first sliding rails; the wind turbine, with a hanging beam slidably matched with the first sliding rails on the body of the wind turbine; a buffer device, which is fixed onto the bottom of the wind turbine, and is slidably matched with the second sliding rails; rotary cranes, which are fixed on the top of the two sides of the U-shaped opening; winch devices, which are installed on the stern of the hull.

Preferably, the buffer device has a plurality of claws, with a hydraulic cylinder on the bottom of each claw.

Preferably, symmetrical wings are provided in the two sides of the hanging beam, and the wings lie on the first sliding rails.

Preferably, the winch device has a steel cable, one end of which is fixed on said winch device, the other end of which is fixed on said hanging beam of the wind turbine.

Preferably, winch devices are also provided at the fore of the hull.

Preferably, fixed pulleys are provided at the fore of the hull for the steel cable to wind on.

Also, the present invention provides a method for transporting and hoisting the offshore wind turbine using foresaid vessel for transporting and hoisting the offshore wind turbine, comprising the following steps: assembling the wind turbines and execute grid-connection test; (2) integrally loading the wind turbines one by one; (3) transporting the hoisting vessel on the sea to a given wind farm position;(4) hoisting the wind turbine above the foundation of the wind turbine, and stably docking the wind turbine to the foundation of the wind turbine via the buffering of the buffer device..

Preferably, the step (2) further comprises: turning around the rotary cranes after they hoist the hanging beam of the wind turbine, and uplifting the wind turbine onto the deck in the hull, making the first sliding rails slidably matched with the hanging beam and the buffer device slidably matched with the second sliding rails; fastening the steel cables of the winch device at the fore onto the hanging beam of the wind turbine, and tightening the steel cables by the winch device at the fore to translate the complete machine of the wind turbine on the vessel, thereby to move the wind turbine to a given position.

Preferably, the step (2) further comprises: turning around the rotary cranes after they hoist the hanging beam of the wind turbine, and uplifting the wind turbine onto the deck in the hull, making the first sliding rails slidably matched with the hanging beam and the buffer device slidably matched with the second sliding rails; winding the steel cables of the winch device at the stern on the fixed pulleys at the fore, fixing the end of the steel cables on to the hanging beam of the wind turbine, and tightening the steel cables by the winch device at the stern to translate the complete machine of the wind turbine on the vessel, thereby to move the wind turbine to a given position.

Preferably, the step (4) further comprises: fastening the steel cables of the winch device at the stern on the hanging beam of the wind turbine, translating the wind turbine into the range of the working radius of the rotary cranes by the retraction of the winch device at the stern, and then unrigging the steel cables, turning around the rotary cranes after they uplift the hanging beam of the wind turbine, and hoisting the wind turbine above the foundation of the wind turbine.

The beneficial technical effects of the present invention are: realizing transporting and hoisting a plurality of sets of wind power turbines in one vessel, providing a novel construction solution for offshore wind power; realizing sufficiently commissioning the wind turbines before the delivery, greatly shortening the time for on-the-field commissioning; reducing the wind power installing vessels' restrictions on the outside conditions such as sea bed and depth of water etc. The present invention not only could perform the construction for offshore wind farms, but also could execute the construction for deep sea wind farms. The present invention is safe, efficient, and economy. It greatly shortens the delivery period of the wind power devices, and makes the devices more competitive.

### BRIEF DESCRIPTION OF THE DRAWINGS

FIG. 1 is a graph integrally illustrating the transporting and hoisting vessel of the present invention;
FIG. 2 is the top view of loading the wind turbine and translating the wind turbine of the present invention;
FIG. 3a and 3b are graphs illustrating the movements of hoisting and installing the wind turbine of the present invention.

Brief description of the drawing reference signs: fixing brackets-1; hanging beam-2; first sliding rails-31; second sliding rails-32; winch devices-4; buffer device-5; rotary crane-6; hull-7; wind turbine-8; foundation of a wind turbine-9; dock-10.

### DETAILED DESCRIPTION OF THE INVENTION

The following preferred embodiments with reference to the accompanying drawings are provided in detail to assist in a comprehensive understanding of the shape, the structure and the feature of the invention.

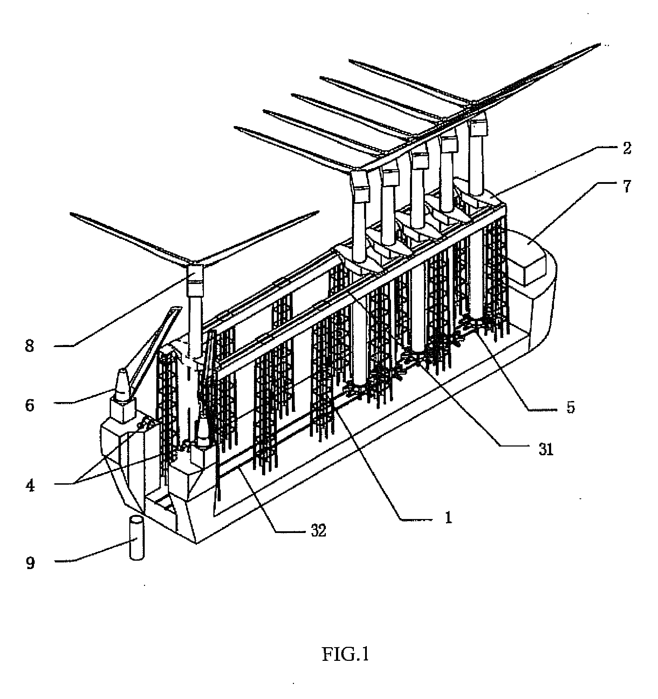

FIG. 1 is a graph integrally illustrating the transporting and hoisting vessel of the present invention. As shown in FIG. 1, the present invention provides a vessel for transporting and hoisting the offshore wind turbine comprises: a hull 7, with a group of hoisting devices in the hull. Said hoisting devices comprise a group of fixing brackets 1, which are a plurality of fixing brackets 1 arranged in two rows in parallel. The bottom of the fixing brackets 1 is fixed onto the deck in the hull 7. A steel structure is fixed on the top of the fixing brackets 1. A first sliding rail 31 is separately installed on each of the two rows of the steel structure. Two second sliding rails 32 are installed on the inner side of the two rows of fixing brackets 1 on the deck in the hull 7, and are in parallel with the first sliding rails 31.

The wind turbine 8 is a complete machine that is assembled, which comprises the components such as the body of the wind turbine and the rotor blades. The structure of the wind turbine 8 is not the inventive point of the present invention, so unnecessary details are not incorporated herein. A hanging beam 2 is installed on the body of the wind turbine 8 and is slidably matched with the first sliding rails 31. Symmetrical wings are provided in the two sides of the hanging beam 2, can lie on the first sliding rails 31, and slide on the first sliding rails 31.

A buffer device 5 is fixed onto the bottom of wind turbine 8 via the bolts and lie on the second sliding rails 32. A matching mechanism matching with the sliding rails is provided on the bottom of the buffer device 5, so as to make the buffer device 5 slidably matched with the second sliding rails 32. The wind turbine 8 could conveniently move in the hull 7 by matching the hanging beam 2 with the first sliding rails 31 and matching the buffer device 5 with the second sliding rails 32.

The buffer device 5 has a plurality of claws, with a hydraulic cylinder on the bottom of each claw. When the wind turbine 8 is landed onto a foundation of the wind turbine 9 where the wind turbine is required to be installed, the impact force between the wind turbine 8 and the foundation of the wind turbine 9 is buffered by the hydraulic cylinder, so as to protect the wind turbine 8.

Two winch devices 4 are provided at the stern of the hull 7. Each winch device 4 comprises a strip of steel cable. One end of the steel cable is fixed onto said winch device 4, the other end of the steel cable is fixed on to the hanging beam 2 of the wind turbine 8 which would be towed. When the winch devices 4 is wound, the steel cable is tightened, thereby tows the wind turbine 8 sliding from the fore to the stern. The complete machine of the wind turbine 8 is translated.

Two winch devices 4 can be provided at the fore too, to translate the complete machine of the wind turbine 8 from the stern to the fore while loading the wind turbine 8. The structure and the working principle of the winch device 4 at the fore are the same as the counterparts of the stern, so unnecessary details are not incorporated.

Said two winch devices 4 at the fore can be substituted by two fixed pulleys. That is to say, two fixed pulleys are set symmetrically at the fore; the steel cables of the winch device 4 at the stern are wound on the fixed pulleys at the fore, and then fixed on the hanging beam 2 of the wind turbine 8. When the wind turbine 8 is being loaded, the winch device 4 at the stern is winding; the steel cables are wound through the fixed pulleys at the fore, and translate the complete machine of the wind turbine 8 by towing it from the stern to the fore. In this way, the same winch device 4 can be used to wind and move the wind turbine 8 in two directions.

A U-shaped opening is provided at the stern for the wind turbine 8 to pass through. A rotary crane 6 is provided on the top of the two sides of the U-shaped opening. When the complete machine of the assembled wind turbine 8 is loaded, each of the two rotary cranes 6 separately hoists the wings of the two sides of the hanging beam 2, hoists the wind turbine 8 from the U-shaped opening into the hull 7, and then lands it onto the sliding rails. When the wind turbine 8 is required to be unloaded, by the same token, after the wind turbine 8 is uplifted by the rotary crane 6, the rotary crane 6 turns around and the wind turbine 8 is unloaded from the interior of the hull 7.

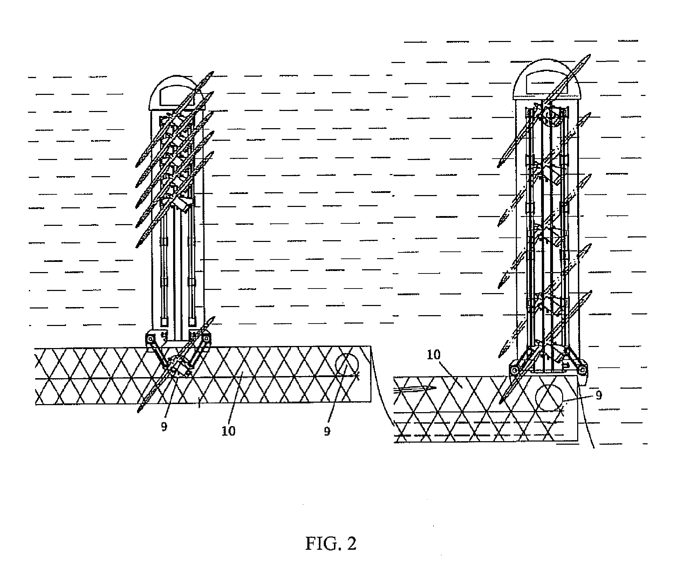

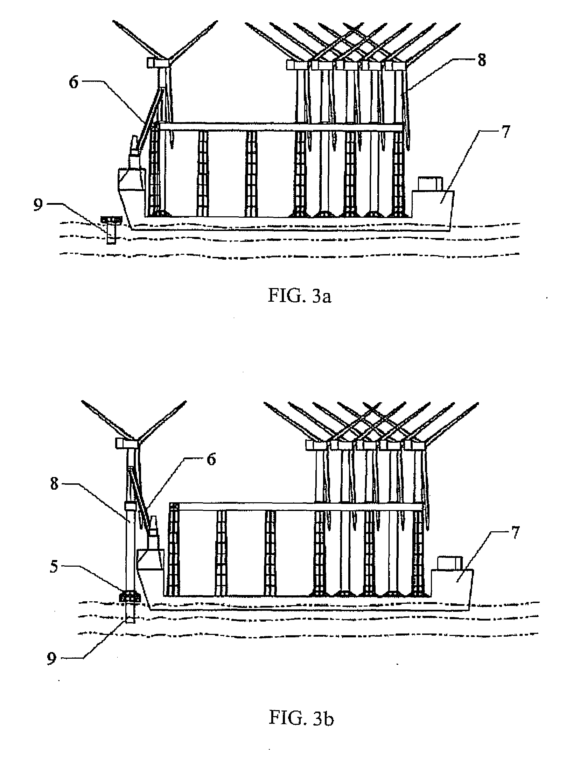

FIG. 2 is the top view of loading the wind turbine and translating the wind turbine of the present invention; FIG. 3a and 3b are graphs illustrating the movements of hoisting the wind turbine of the present invention. As show in the figures, the present invention provides a method for transporting and hoisting offshore wind turbine achieved by using foregoing transporting and hoisting vessel. Its detailed implementing methods are as follows:
First, the wind turbines 8 are assembled in the dock 10, and execute grid-connection test. And then the wind turbines 8 are unloaded one by one from the foundation of the wind turbine 9 in the dock 10, and are integrally loaded. Details are incorporated herein. After two rotary cranes 6 on the transporting and hoisting vessel hoist the hanging beam 2 of the wind turbine 8, they turn around, and uplift the wind turbine 8 onto the deck in the hull 7, making the first sliding rails 31 slidably matched with the hanging beam 2 and the buffer device 5 slidably matched with the second sliding rails 32.

The steel cables of the winch device 4 at the fore are fixed onto the hanging beam 2 of the wind turbine 8. The steel cables are tightened by the winch device 4 at the fore, to translate the complete machine of the wind turbine 8 on the vessel, thereby to move the wind turbine 8 from the stern toward the fore to a given position. Alternatively, steel cables of the winch device 4 at the stern are wound on the fixed pulleys set at the fore, and then fixed onto the hanging beam 2 of the wind turbine 8. The steel cables are tightened by the winch device 4 at the stem, turn around via the fixed pulleys, and move the wind turbine 8 from the stern to a given position of the fore.

After all of the wind turbines 8 are loaded and fixed, the loading work of the wind turbines 8 is accomplished. After the wind turbines 8 being loaded, they are transported on the sea to a given wind farm location with the hoisting vessel. After the hoisting vessel is precisely positioned, it is ballasted to prepare to hoist the complete machine of the wind turbine 8.

In the process of hoisting, the steel cables of the winch devices 4 are fixed on the hanging beam 2 of the wind turbine 8. The winch devices 4 retract to translate the wind turbine 8 into the range of the working radius of the rotary cranes 6. Thereafter, the steel cables are unrigged. After the rotary cranes 6 uplift the hanging beam 2 of the wind turbine 8, the rotary cranes 6 turn around, and the wind turbine 8 is hoisted above the foundation 9 of the wind turbine. The wind turbine 8 is stably docked to the foundation of the wind turbine 9 via the buffering of the buffer device 5. And then the hoisting vessel moves to the next position to hoist the next wind turbine 8.

The present invention provides a vessel for transporting and hoisting the offshore wind turbine. The beneficial technology effect achieved by the foregoing technical solution is enabling the wind turbine to be integrally transported and hoisted. The present invention could not only ensure that the wind turbines is sufficiently commissioned before the hoisting, but also could transport and hoist the offshore wind turbine economically and efficiently. The present invention not only shortens the building period of the wind farms greatly, but also reduces the commissioning work after hoisting the wind turbine, to realize the rapid grid-connection test of the offshore wind turbine. The present invention realizes transporting and hoisting a plurality of sets of wind turbines in one vessel, provides a novel construction solution for offshore wind power; realizes sufficiently commissioning the wind turbines before the delivery, and greatly shortens the time for on-the-field commissioning; reducing the wind power installing vessels' restriction on the outside conditions such as sea bed and depth of water etc. The present invention not only could perform the construction for offshore wind farms, but also could execute the construction for deep sea wind farms. The present invention is safe, efficient, and economy. It greatly shortens the delivery period of the wind power devices, and makes the devices more competitive.

It will be appreciated that the foregoing descriptions of the present invention are illustrative, but not restrictive for the ordinary skilled person in the art. Within the scope and spirit of the claims of the present invention, a plurality of modifications, changes, or equivalences could be made without departing from the scope and spirit of the invention.

## Claims

1. A vessel for transporting and hoisting the offshore wind turbine, **characterized by** comprising:
a hull, with a U-shaped opening at the stern of the hull for a wind turbine to pass through;
a plurality of fixing brackets, which are arranged in two rows in parallel, the bottom of which are fixed onto the deck in the hull;
first sliding rails, which are installed on the top of each row of the fixing brackets;
second sliding rails, which are installed on the inner side of the two rows of fixing brackets on the deck in the hull, and are in parallel with said first sliding rails;
a hanging beam, which is installed on the body of the wind turbine, and is slidably matched with the first sliding rails;
a buffer device, which is fixed onto the bottom of the wind turbine, and is slidably matched with the second sliding rails;
rotary cranes, which are fixed on the top of the two sides of the U-shaped opening;
winch devices, which are installed on the stern of the hull.

2. A vessel for transporting and hoisting the offshore wind turbine as claimed in claim 1, **characterized in that** the buffer device has a plurality of claws, with a hydraulic cylinder on the bottom of each claw.

3. A vessel for transporting and hoisting the offshore wind turbine as claimed in claim 1, **characterized in that** symmetrical wings are provided in the two sides of the hanging beam, and the wings lie on the first sliding rails.

4. A vessel for transporting and hoisting the offshore wind turbine as claimed in claim 1, **characterized in that** the winch device has a steel cable, one end of which is fixed on said winch device, the other end of which is fixed on said hanging beam of the wind turbine.

5. A vessel for transporting and hoisting the offshore wind turbine as claimed in claim 1, **characterized in that** winch devices are also provided at the fore of the hull.

6. A vessel for transporting and hoisting the offshore wind turbine as claimed in claim 4, **characterized in that** fixed pulleys are provided at the fore of the hull for the steel cable to wind on.

7. A method for transporting and hoisting the offshore wind turbine using the vessel for transporting and hoisting the offshore wind turbine **characterized by** comprising the following steps:
(1) assembling the wind turbines and execute grid-connection test;
(2) integrally loading the wind turbines one by one;
(3) transporting the hoisting vessel on the sea to a given wind farm position;
(4) hoisting the wind turbine above the foundation of the wind turbine, and stably docking the wind turbine to the foundation of the wind turbine via the buffering of the buffer device.

8. A method for transporting and hoisting the offshore wind turbine as claimed in claim 5, **characterized in that** the step (2) further comprises: turning around the rotary cranes after they hoist the hanging beam of the wind turbine, and uplifting the wind turbine onto the deck in the hull, making the first sliding rails slidably matched with the hanging beam and the buffer device slidably matched with the second sliding rails; fastening the steel cables of the winch device at the fore onto the hanging beam of the wind turbine, and tightening the steel cables by the winch device at the fore to translate the complete machine of the wind turbine on the vessel, thereby to move the wind turbine to a given position.

9. A method for transporting and hoisting the offshore wind turbine as claimed in claim 5, **characterized in that** the step (2) further comprises: turning around the rotary cranes after they hoist the hanging beam of the wind turbine, and uplifting the wind turbine onto the deck in the hull, making the first sliding rails slidably matched with the hanging beam and the buffer device slidably matched with the second sliding rails; winding the steel cables of the winch device at the stern on the fixed pulleys at the fore, fixing the end of the steel cables on to the hanging beam of the wind turbine, and tightening the steel cables by the winch device at the stern to translate the complete machine of the wind turbine on the vessel, thereby to move the wind turbine to a given position.

10. A method for transporting and hoisting the offshore wind turbine as claimed in claim 8 or 9 **characterized in that**, the step (4) further comprises: fastening the steel cables of the winch device at the stern on the hanging beam of the wind turbine, translating the wind turbine into the range of the working radius of the rotary cranes by the retraction of the winch device at the stem, and then unrigging the steel cables, turning around the rotary cranes after they uplift the hanging beam of the wind turbine, and hoisting the wind turbine above the foundation of the wind turbine.

## Amended claims

### Amended claims under Art. 19.1 PCT

**1.** A vessel for transporting and hoisting the offshore wind turbine, **characterized by** comprising:
a hull, with a U-shaped opening at the stern of the hull for a wind turbine to pass through;
a plurality of fixing brackets, which are arranged in two rows in parallel, the bottom of which are fixed onto the deck in the hull;
first sliding rails, which are installed on the top of each row of the fixing brackets;
second sliding rails, which are installed on the inner side of the two rows of fixing brackets on the deck in the hull, and are in parallel with said first sliding rails;
a hanging beam, which is installed on the body of the wind turbine, and is slidably matched with the first sliding rails;
a buffer device, which is fixed onto the bottom of the wind turbine, and is slidably matched with the second sliding rails;
rotary cranes, which are fixed on the top of the two sides of the U-shaped opening;
winch devices, which are installed on the stern of the hull.

**2.** A vessel for transporting and hoisting the offshore wind turbine as claimed in claim 1, **characterized in that** the buffer device has a plurality of claws, with a hydraulic cylinder on the bottom of each claw.

**3.** A vessel for transporting and hoisting the offshore wind turbine as claimed in claim 1, **characterized in that** symmetrical wings are provided in the two sides of the hanging beam, and the wings lie on the first sliding rails.

**4.** A vessel for transporting and hoisting the offshore wind turbine as claimed in claim 1, **characterized in that** the winch device has a steel cable, one end of which is fixed on said winch device, the other end of which is fixed on said hanging beam of the wind turbine.

**5.** A vessel for transporting and hoisting the offshore wind turbine as claimed in claim 1, **characterized in that** winch devices are also provided at the fore of the hull.

**6.** A vessel for transporting and hoisting the offshore wind turbine as claimed in claim 4, **characterized in that** fixed pulleys are provided at the fore of the hull for the steel cable to wind on.

**7.** A method for transporting and hoisting the offshore wind turbine using the vessel for transporting and hoisting the offshore wind turbine as claimed in claim 1 **characterized by** comprising the following steps:
(1) assembling the wind turbines and execute grid-connection test;
(2) integrally loading the wind turbines one by one;
(3) transporting the hoisting vessel on the sea to a given wind farm position;
(4) hoisting the wind turbine above the foundation of the wind turbine, and stably docking the wind turbine to the foundation of the wind turbine via the buffering of the buffer device.

**8.** A method for transporting and hoisting the offshore wind turbine as claimed in claim 7, **characterized in that** the step (2) further comprises: turning around the rotary cranes after they hoist the hanging beam of the wind turbine, and uplifting the wind turbine onto the deck in the hull, making the first sliding rails slidably matched with the hanging beam and the buffer device slidably matched with the second sliding rails; fastening the steel cables of the winch device at the fore onto the hanging beam of the wind turbine, and tightening the steel cables by the winch device at the fore to translate the complete machine of the wind turbine on the vessel, thereby to move the wind turbine to a given position.

**9.** A method for transporting and hoisting the offshore wind turbine as claimed in claim 7, **characterized in that** the step (2) further comprises: turning around the rotary cranes after they hoist the hanging beam of the wind turbine, and uplifting the wind turbine onto the deck in the hull, making the first sliding rails slidably matched with the hanging beam and the buffer device slidably matched with the second sliding rails; winding the steel cables of the winch device at the stern on the fixed pulleys at the fore, fixing the end of the steel cables on to the hanging beam of the wind turbine, and tightening the steel cables by the winch device at the stern to translate the complete machine of the wind turbine on the vessel, thereby to move the wind turbine to a given position.

**10.** A method for transporting and hoisting the offshore wind turbine as claimed in claim 8 or 9 **characterized in that**, the step (4) further comprises: fastening the steel cables of the winch device at the stern on the hanging beam of the wind turbine, translating the wind turbine into the range of the working radius of the rotary cranes by the retraction of the winch device at the stem, and then unrigging the steel cables, turning around the rotary cranes after they uplift the hanging beam of the wind turbine, and hoisting the wind turbine above the foundation of the wind turbine.
